# EUROPEAN PATENT SPECIFICATION

(11) **EP 2 248 353 B1**
(45) Date of publication and mention of the grant of the patent: **19.10.2011**
(21) Application number: 09712894.6
(22) Date of filing: 19.02.2009
(51) Int. Cl.: H04W 4/00

(54) **TRAVELER'S ALERT SYSTEM**
HINWEISSYSTEM FÜR REISENDE
SYSTÈME D'ALERTE DU VOYAGEUR

(30) Priority: 22.02.2008 NO 20080961; 22.02.2008 US 30575 P
(43) Date of publication of application: 10.11.2010
(73) Proprietor: Unified Messaging Systems AS, 0501 Oslo (NO)
(72) Inventor: HEEN, Kjell-Harald, N-1087 OSLO (NO)
(74) Representative: Onsagers AS
(86) International application number: PCT/NO2009/000056
(87) International publication number: WO 2009/104970

(56) References cited:
- EP-A- 1 209 886
- US-A1- 2004 103 158
- US-A1- 2006 234 672

## Description

### Technical field

The present invention describes a method and a system for producing an updated status of users, associated with an MSISDN number in a mobile network, who are staying in a specific geographical area abroad, where it is desirable to be able to send information and warn of an undesirable event by sending a message to persons concerned.

### Background for the invention

Disasters and accidents are problems which are increasingly the focus of attention in today's society. This is largely the result of how society has developed to become a communication society. Such events are among those seized upon by the media, and such reporting helps to inform a population that a disaster or accident has happened. Moreover, our society has become much more complex, and people are often affected directly or indirectly by a disaster or accident. People may experience disasters or accidents in their home, at their workplace, on trips or in connection with different forms of transport.

The present invention focuses on preventing undesirable events for persons on trips and who are staying abroad.

Such events may occur in cities, in built-up areas, on roads and in transport systems as well as in buildings, manufacturing plants etc.

In today's society, there is a great deal of travelling activity in connection with both leisure and business. Travelling to remote destinations has become commonplace. Therefore, we must increasingly relate to a globalised world with the dangers that may involve.

The world also seems to have become more unpredictable with an increased volume of extreme weather, war and terrorist actions which could affect the civilian population and travellers.

Weather conditions as, for example, tornadoes, floods, rain, lightning, conditions promoting pollution, etc. are often a cause of disasters and accidents. In addition, there may be epidemics or other diseases that affect people travelling in the area concerned. Such situations create a need to provide information to affected parties ahead of an undesirable event.

In connection with disasters and accidents, it is important to be able to secure and manage information flow. Dissemination of information by mobile telephone has proven to be a good channel for global alert services, as mobile telephone networks are being developed across ever-larger parts of the globe, resulting in a steady improvement in coverage.

Today, our planet is monitored continuously, and often we know in advance that persons will be affected by an event. Types of monitoring are for example, meteorological monitoring, seismic monitoring, GMES, GDACS and information from the press.

Persons or groups such as families, companies, and organisations etc. who are staying or residing abroad and who should be informed, can, with the aid of the present invention, be informed in a simple manner. This may, for example, be information about a presumed disaster or accident in a specific geographical area.

When a disaster or accident goes through its cycle from start to finish, there is a huge need for information to affected parties, and for outgoing communication from these parties. Outgoing communication is typically status or condition of the person, also referred to as the user, who receives information on his mobile telephone.

Valuable and important information has hitherto often not reached affected persons because it is not known who is in a geographical area concerned. Furthermore, there are no good systems or routines for providing warning or information. Local transmission of an alert, typically in the form of sirens, is what has thus far been used.

In the Red Cross World Disasters Report 2005, it is concluded that even though researchers in a region have the necessary technology to register the massive earthquake off Sumatra that triggered the known tragedy, they lacked the means to tell people of the consequences and what they needed to do.

Early warning is an obvious preventive means, and the accuracy and promptness of this information alone may save lives.

For persons abroad, language difficulties are also often a problem when it comes to acquiring information about what is happening if a form of local alert is initiated.

Thus, there is a need to have a continuous overview of the persons who are staying or residing abroad so that they can easily be alerted as required. Another example can be found in document EP 1 209 886 (Alcatel USA S.) 29 May 2002.

The present invention seeks to meet this need by means of a method and a system for performing efficient alerting of persons in specific geographical areas as required.

This is done in that an overview is given in real time of Norwegians travelling all over the world. The overview is on country and region levels.

The system provides the possibility of alerting all persons in one or more affected countries at the same time by means of SMS or telephony calls. Transmitted alerts can warn many people in a few minutes. After an alert has been transmitted, the system can receive and categorise response from the recipients of the messages, and identify whether a person concerned is affected by the event in question.

The system according to the invention is fully automated and does not require any form of maintenance.

An operator of the system will be presented with information comprising maps from which the area concerned can be selected. The number of persons in the area concerned will be presented, and the operator can send desired information to one or more selected areas. The system will also be capable of receiving information from persons who have received the alert, and who respond to a transmitted message. In this way, the system will also present the status of different persons who are in the area concerned to which an alert has been sent.

### Brief description of the invention

The present invention describes a method and a system for presenting an updated status overview of persons who are staying in one or more specific geographical locations abroad, and where it is desirable to transmit a message to persons concerned, the persons being identified in that they are associated with an MSISDN number in a mobile network.

The method is described by a plurality of steps that are executed in a server which is connected to said mobile network, and where the server is in communication with one or more clients with user interface, and a database which comprises updated location information for MSISDN numbers associated with persons who are staying in different locations abroad.

The method is described in the independent method claim, and has additional features as set forth in the associated dependent claims.

The system is disclosed in the independent system claim.

### Detailed description of the invention

The invention will now be described in more detail with reference to the figures, wherein:
Figure 1 shows the methodology for locating persons travelling abroad;
Figure 2 shows the methodology for alerting persons travelling abroad;
Figures 3A-C show an example of the user interface used to locate persons and send messages to them;
Figure 4 shows an example of the user interface used to follow up persons who have been located; and
Figure 5 shows an example of a user interface for a regional area which is used to locate persons and send messages to them.

The present invention comprises a method for presenting an updated status overview of persons who are staying in one or more specific geographical locations abroad, and where it is desirable to send a message to persons concerned, the persons being identified in that they are associated with an MSISDN number in a mobile network.

The method is characterised in that the following steps are executed in a server 10 which is connected to said mobile network, and where the server 10 is in communication with one or more clients 20 with user interface, and a database 30 which includes updated location information for MSISDN numbers associated with persons who are staying in different locations abroad.

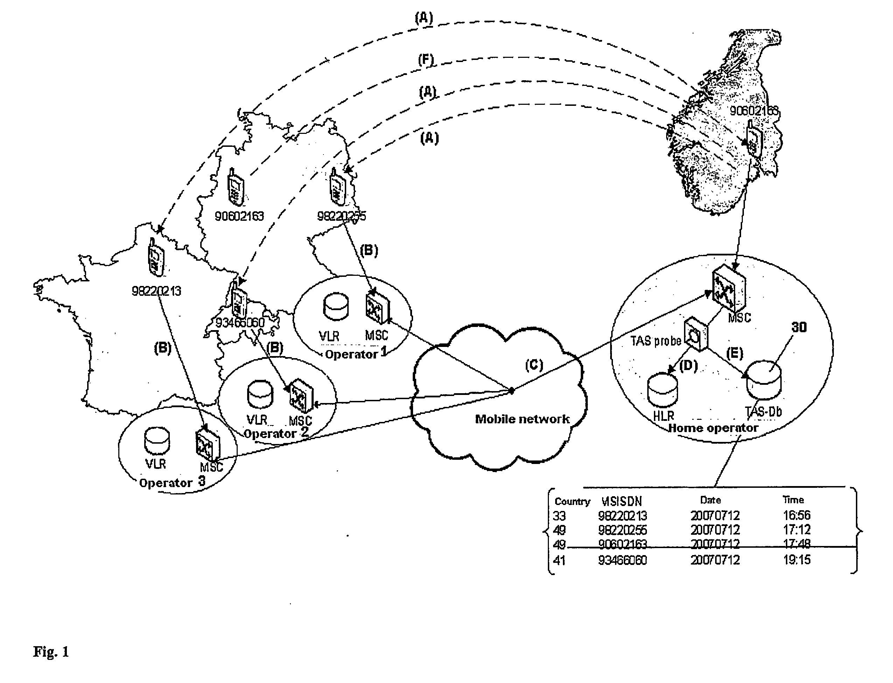

Said database 30, containing updated location information, is a central part of the present invention, and the function thereof will be explained in more detail with reference to Figure 1.

Figure 1 shows the methodology for locating persons travelling abroad.

In the illustrated example, a person travels abroad from his home country Norway, and returns to Norway after a certain time. In what follows, it should be understood that the person has with him a mobile telephone associated with an MSISDN number, and that it is this number that identifies the person crossing frontiers and travelling in different areas.

In what follows it is a prerequisite that the architecture of a telephone communication network is known, and thus how persons moving from one area with mobile coverage to another will be traceable independent of operator and country.
(A): A mobile telephone with an MSISDN number associated with a home operator travels out of the home country and to another country.
(B): On arrival in another country, the MSISDN of the mobile telephone, when this is switched on, will immediately be registered by a foreign operator.
(C): The foreign operator asks the home operator for various information before the mobile telephone can be used on the visited network. This information includes details about debiting etc. which the operator uses when updating his VLR (visit database). This is a known procedure and a part of standardised international roaming.
(D): The home operator makes a search in the HLR (Home Location Register) with MSISDN as input to find, inter alia, authorization information. The query is marked with the operator ID (MSC - Mobile Switching Center ID of foreign operator, including country) and the MSISDN number of the associated person. This information will provide the basis for knowing where the person concerned is.
(E): At the home operator, in this case at an operator in Norway, there is a probe (described as TAS (Travellers Alert System) Probe in Fig. 1) between HLR and MSC. This identifies queries, ref. point (D), which contain location information, this information being used to update a database 30 (referred to in what follows as TAS database) comprising data about the visited country, region, mobile number (MSISDN), date and time for last update for each person associated with the MSISDN number. In the figure an example is shown in a table which is in the TAS database 30 of the home operator.
   Through use of the probe, the TAS database 30 will at all times contain updated information about persons staying abroad, in that a new registration comprising updated location information and MSISDN numbers is added to the TAS database 30 when the probe detects a query about a relevant MSISDN number from a foreign operator, and where the record is updated continuously as new queries from new areas or countries are detected; and furthermore in that an existing registration is deleted from the TAS database 30 when the probe detects that a person associated with the MSISDN number in question returns to his home country.
(F): The mobile returns to Norway. This is registered by the home operator which deletes the name and MSISDN number from the TAS database 30 upon arrival with the home operator. This operation is shown as a struck-out line in the exemplary table from the TAS database 30.

The whole process in the steps described above is based on standardised protocols and signalling between mobile networks and will function independent of different national implementations.

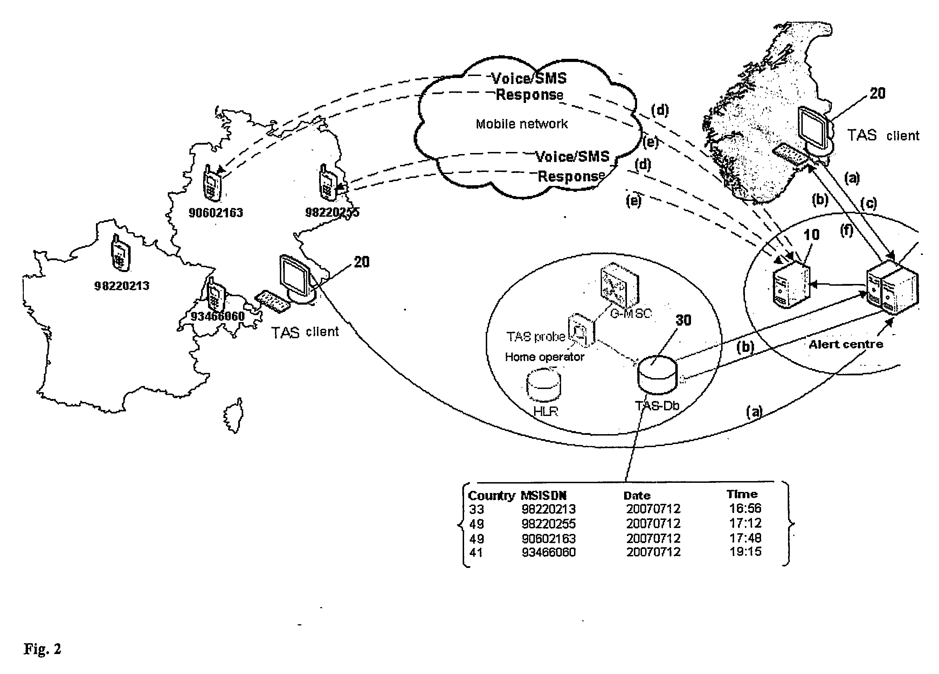

Figure 2 shows the methodology for alerting persons travelling abroad. The methodology that can be seen from the figure reflects the characteristic features of the present invention.

In what follows, the different steps that are executed in a server 10 connected to a mobile network are described. Several servers 10 may be interconnected, and be in communication with one or more clients 20 with user interface and said TAS database 30 which comprises updated location information for MSISDN numbers associated with persons staying at different locations abroad.

A client 20 constitutes the interface with the server 10 for an end user, and may be available for national authorities, the foreign service and embassies abroad. In the event of an incident, the client 20 can be activated, and country/area as described above can be selected.
(a) The server 10 first receives a query from a client 20 comprising information about a relevant location or locations where it is desirable to have an updated status overview of which persons are staying in the location(s), and where message transmission is desirable.
(b) The server 10 subsequently collects relevant information from said database 30 based on the queried location, the information comprising the identity of persons associated with MSISDN numbers who are currently located at the queried location, this information being sent to the client 20 for presentation on the user interface. How the database is kept updated with the aid of a probe was explained above with reference to Fig. 1 (E).
(c) If it is desirable to send a message to MSISDN numbers located at a relevant location or locations, the server 10 will receive information to this effect from the client 20. The type of message transmission may be an SMS or telephone message. The content of the message will also be received on the server 10 from the client 20.
d) When the server 10 receives a command to start transmission, the server 10 will transmit relevant message information to persons in the queried locations concerned, i.e., to relevant MSISDN numbers.
e) The transmitted message information may contain invitations to respond to the message. The server 10 will then receive and process any response messages from persons who receive the message, and update the status information of the persons in the database 30 based on the response messages.
f) Updated status information of the persons in question is then sent from the server 10 to said client 20 for presentation of status of the persons.

The end user operating the client will then be presented with an updated status overview of persons who are staying in one or more specific geographical locations abroad.

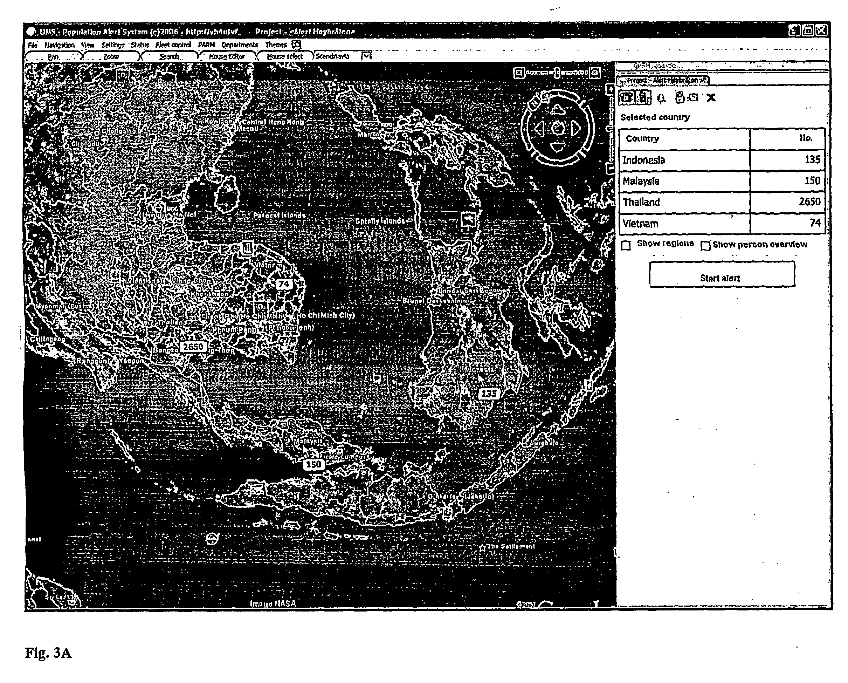

Figures 3A-C show an example of the user interface that is used to locate persons and send messages to them.

Figure 3A shows an example of a type of user interface with which the end user of a client 20 is presented. By zooming and panning in a graphical user interface, it is easy to find the area or areas of which it is desired to have an overview, no matter whereabouts in the world they are, before a possible message is to be sent to the persons staying there.

When the end user clicks on the country or countries/area or areas that are to be alerted, the user is presented with a number of persons, in this case a number of Norwegians, who are staying in the countries/areas. Within each country it is possible to have a more detailed overview by selecting "Show regions". Furthermore, it is possible to have an overview of the identity of the persons by selecting "Show person overview".

Before a message, for example in the form of an alert to specific geographical locations, is sent, the sender selects whether the alert is to be effected by the transmission of SMS messages, or by direct telephone calls. When it is decided to start the transmission of the message, "Start alert" is pressed.

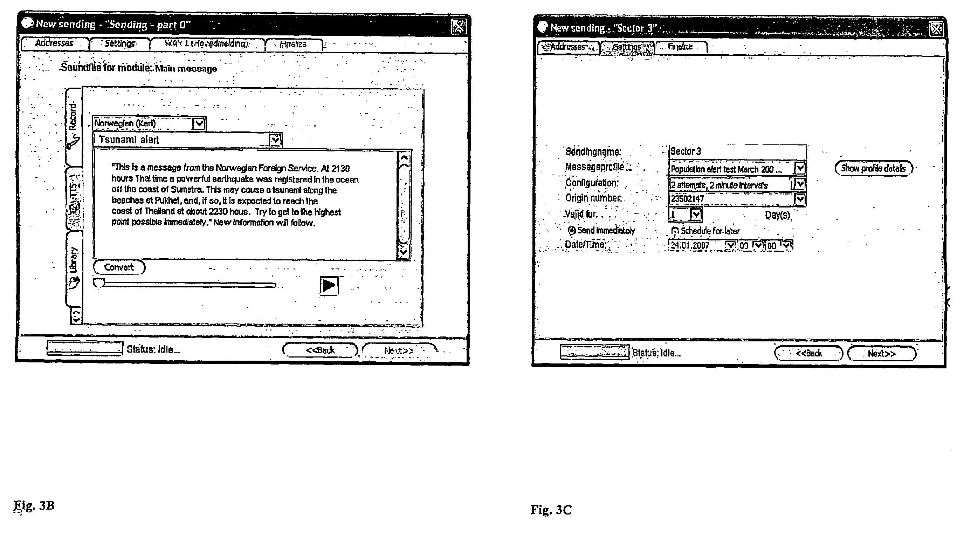

Figure 3B shows an example of a window which comes up when transmission of a message has been initiated. Here, various parameters can be set, such as name of the transmission, profile, number of transmissions (sent messages before a response is received), validity of the transmission, whether the message should be sent immediately or at a given time etc.

Figure 3C shows an example of a window in which the message content is indicated for both spoken and text-based alerts.

Figure 4 shows an example of a user interface that is used to follow up persons who have been located.

When recipients of a message are asked to respond to the message, either by key depression or by SMS, the system will, through an assessment of the response, categorise the alerted persons and present this categorisation in the user interface on the client 20.

When a message is transmitted by telephone to warn of, for example, a tsunami, the response may be to make certain key depressions, for example, "Press 2 if you are in the area and go to safe higher ground. New info to be given. Press 9 if you are not in the area in question".

When an SMS message is sent to warn of a tsunami, the response may to be reply by sending an SMS, for example: "Press 20 and return message if you are in the area in order to receive updated information. Press 90 and return message if you are not in the area".

The status information that is shown in the user interface on the client 20 is then categorised according the type of response given in the returned message from the persons who have received the message, and where the number of persons in each category is listed. The categories may be:

"In danger": response indicates that the person could be affected by the event;

"Checked out": response indicates that they are not affected by the event;

"Unclarified": are those who have not responded or have not been reached (not replied to the call, technical fault on equipment or telephone network etc.). The system will automatically try a number of times if this is set up as a parameter as described in connection with Fig. 3B. This number will therefore be reduced as contact with relevant recipients of the messages is made. A new message with follow-up information can be sent to everyone having the same status.

An overview at person level can also be given in this screen image. Such an overview can be exported and processed in other programs and systems.

For persons in the category "danger", further and updated messages with information can be sent. The same applies to the category "unclarified".

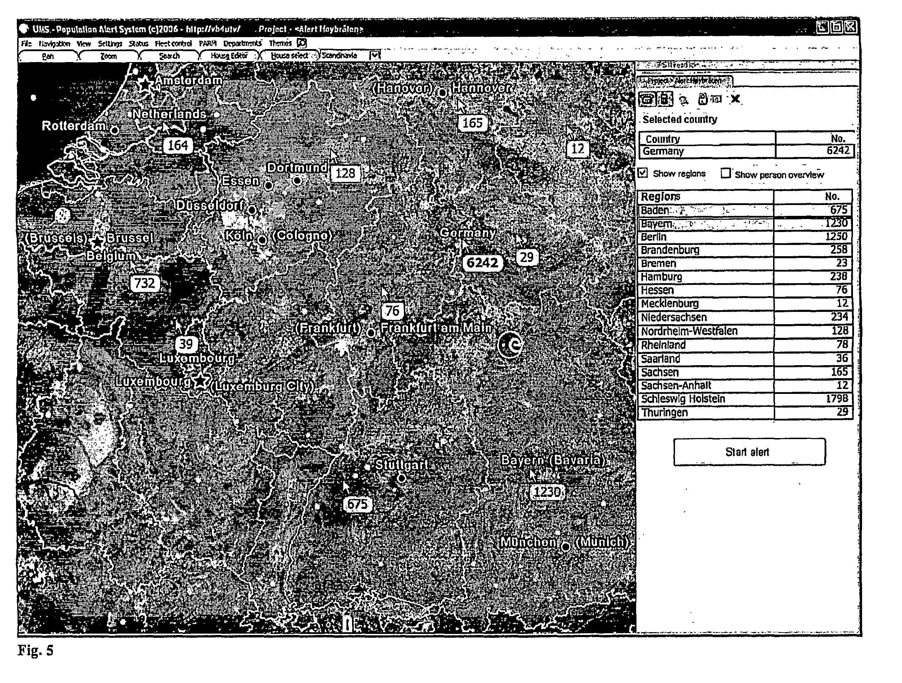

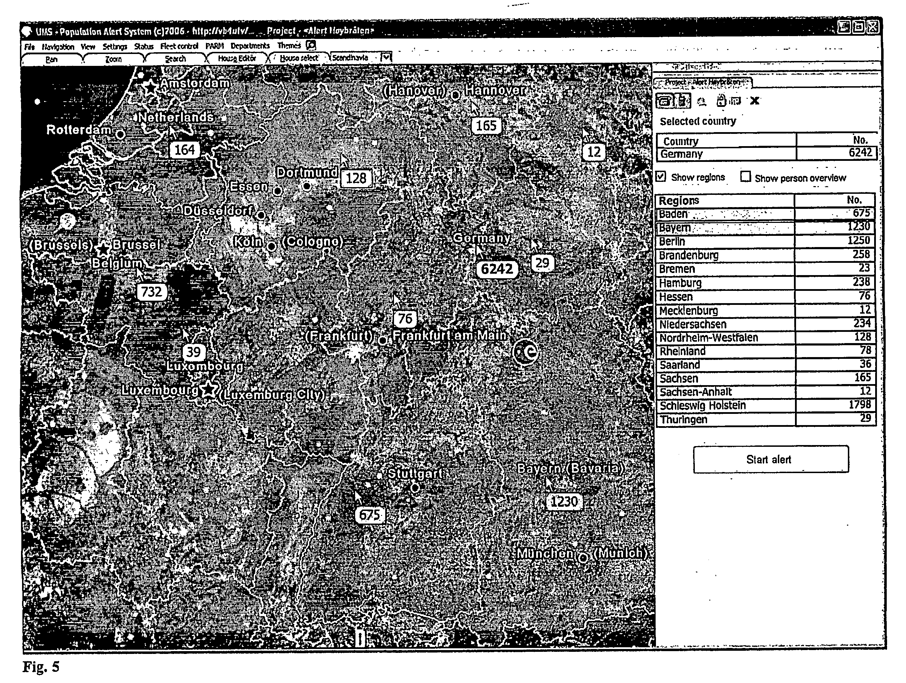

Figure 5 shows an example of a graphical user interface with an overview of regional areas that is used to locate persons within areas in countries in order to be able to sent them messages. The methodology corresponds to that described above, but the user interface is slightly different.

First, the country or countries that are relevant are selected. Countries are shown in the figure in a list of "Selected countries". Then "Show regions" is selected. These can be shown both on a map with icons showing the number of persons concerned (Norwegians in this example), and in a list of regions. The region may now be selected in the same way as countries by pressing on an icon on the map or selecting a region from the list. When the user is ready to send a message, in this case as an alert, he presses "Start alert" when region and warning method have been selected. The further procedure will then be as explained in connection with Figures 3B-C and 4.

The examples above with the different screen images showing the user interface on the client are only intended to illustrate the user friendliness of the system for sending information in the form of alerts to persons who are staying in abroad.

It is the steps that are carried out in the server 10 that are the essence of the invention as defined in the independent method claims, and the system which performs the inventive method, as defined in system claim 12.

## Claims

1. A method for presenting an updated status overview of users staying in one or more specific geographical locations abroad, and where it is desirable to send a message to users concerned, the users being identified in that they are associated with an MSISDN number in a mobile network, and where
the following steps are executed in a server (10) which is connected to said mobile network, and where the server (10) is in communication with one or more clients (20) with user interface, and a database (30 comprising updated location information for MSISDN numbers associated with the users staying in different locations abroad:
a) receiving a query from the client (20) comprising information about a relevant location or locations where a message transmission is desirable;
b) collecting relevant information from said database (30) based on the queried location, the information comprising relevant personal details for users associated with MSISDN numbers who are currently located in the queried location, and where this information is sent to the client (20) for presentation on the user interface;
c) receiving information from the client (20) about the message to be sent to MSISDN numbers located in a relevant location or locations;
d) sending said message to users associated with relevant MSISDN numbers;
e) receiving and processing any response messages from users who receive the message, and updating status information of the users in the database (30) based on the response messages, and categorising such response messages in categories according to the type of response given.
f) sending additional information as a result of an undesired event to users who are still in the area in question to follow up these users, and
g) sending said updated status information to said client (20) for presentation of status of the users.

2. A method according to claim 1,
**characterised in that**
the database (30) is continuously updated with location information and MSISDN numbers of users who are staying abroad with the aid of a probe that identifies queries from foreign operators in the mobile network to the home location register (HLR).

3. A method according to claim 2,
**characterised in that** a new registration comprising updated location information and MSISDN numbers is added to the database (30) when the probe detects a query about a relevant MSISDN number from a foreign operator, and where the registration is updated continuously as new queries from new areas or countries are detected.

4. A method according to claims 2 and 3,
**characterised in that** an existing registration is deleted from the database (30) when the probe detects that a user associated with the MSISDN number concerned returns to his home country.

5. A method according to one of the preceding claims,
**characterised** i n that the database, in addition to location information and MSISDN number, also comprises date and time for last update for each associated user

6. A method according to claim 1,
**characterised in that** the received query regarding geographical area in point a) relates to a whole country or specific regions in one or more countries.

7. A method according to claim 1,
**characterised in that** step d) is executed by sending an SMS or by a telephone call.

8. A method according to claim 1,
**characterised in that** the categories in step e) are: users staying in a danger zone, users who have been checked out and who are outside the danger zone, unclarified status for users owing to a lack of response, unanswered call or technical fault on the telecommunications network.

9. A method according to claim 1,
**characterised in that** the display of status is presented on a graphical user interface connected to the client(s) (20), where an operator of the system is presented with an overview of all users who are staying abroad, and where the operator can go into each country and area for detailed status information, and where the operator, through said user interface, can further execute said alert of users staying in one or more selected geographical areas.

10. A system for presenting an updated status overview of users staying in one or more specific geographical locations abroad and where it is desirable to send a message to users concerned, wherein the users are identified in that they are associated with an MSISDN number in a mobile network,
**characterised in that** the system comprises a server (10) which is in communication with one or more clients (20) with user interface, and a database (30) comprising updated location information and MSISDN numbers associated with the users who are staying abroad, and where the system further comprises means for executing the method described in claims 1 - 9.

## Patentansprüche

1. Verfahren zum Darstellen von einer aktualisierten Status-Übersicht von Nutzern, welche in einem oder mehreren spezifischen geografischen Orten im Ausland residieren, und wobei es gewünscht ist, eine Meldung an betroffene Nutzer zu senden, wobei die Nutzer dahin gehend identifiziert sind, dass sie mit einer MSISDN-Nummer in einem Mobil-Netzwerk in Zusammenhang stehen, und wobei
die folgenden Schritte in einem Server (10), welcher mit dem Mobil-Netzwerk verbunden ist, und wobei der Server (10) mit einem oder mehreren Clients (20) mit einer Nutzer-Schnittstelle in Verbindung steht, und einer Datenbank (30) ausgeführt werden, welche eine aktualisierte Ortsinformation für MSISDN-Nummern enthält, welche mit den Nutzern in Zusammenhang stehen, welche in unterschiedlichen Orten im Ausland residieren:
a) Empfangen von einer Abfrage von dem Client (20), welche eine Information über einen relevanten Ort oder Orte, bei welchen eine Meldungsübertragung gewünscht ist, enthält;
b) Einsammeln von einer relevanten Information von der Datenbank (30), basierend auf dem abgefragten Ort, wobei die Information relevante Personendetails für Nutzer enthält, welche mit MSISDN-Nummern in Zusammenhang stehen, welche derzeit in dem abgefragten Ort residieren, und wobei diese Information zur Präsentation auf der Nutzer-Schnittstelle an den Client (20) gesendet wird;
c) Empfangen von einer Information von dem Client (20) über die Meldung, welche an die MSISDN-Nummern zu senden ist, welche in einem relevanten Ort oder in Orten residieren;
d) Senden der Meldung an Nutzer in Zusammenhang mit relevanten MSISDN-Nummern;
e) Empfangen und Verarbeiten von jeglichen Antwortmeldungen von Nutzern, welche die Meldung empfangen, und Aktualisieren von einer Statusinformation der Nutzer in der Datenbank (30), basierend auf den Antwortmeldungen, und Kategorisieren solcher Antwortmeldungen in Kategorien gemäß dem Typ von abgegebener Antwort;
f) Senden von einer zusätzlichen Information, resultierend aus einem nicht gewünschten Ereignis, an Nutzer, welche immer noch in dem in Frage stehenden Bereich verweilen, um diese Nutzer nachzufolgen; und
g) Senden der aktualisierten Statusinformation an den Client (20) zur Darstellung des Status der Nutzer.

2. Verfahren nach Anspruch 1,
**dadurch gekennzeichnet, dass** die Datenbank (30) kontinuierlich mit einer Ortsinformation und MSISDN-Nummern von Nutzern aktualisiert wird, welche im Ausland residieren, mit Hilfe von einer Untersuchung, welche Abfragen von fremden Betreibern in dem Mobilnetzwerk zu dem Heim-Ortsregister (HLR) identifiziert.

3. Verfahren nach Anspruch 2,
**dadurch gekennzeichnet, dass** eine neue Registrierung, welche eine aktualisierte Ortsinformation und MSISDN-Nummern enthält, der Datenbank (30) hinzugefügt wird, wenn die Überprüfung eine Abfrage über eine relevante MSISDN-Nummer von einem fremden Betreiber erfasst, und wobei die Registrierung kontinuierlich aktualisiert wird, wenn neue Abfragen von neuen Bereichen oder Ländern erfasst werden.

4. Verfahren nach Anspruch 2 und 3,
**dadurch gekennzeichnet, dass** eine bestehende Registrierung aus der Datenbank (30) gelöscht wird, wenn die Überprüfung erfasst, dass ein Nutzer, welcher mit der MSISDN-Nummer in Zusammenhang steht, welcher betroffen ist, in sein Heimatland zurückkehrt.

5. Verfahren nach einem der vorhergehenden Ansprüche,
**dadurch gekennzeichnet, dass** die Datenbank, zusätzlich zur Ortsinformation und MSISDN-Nummer, ebenso ein Datum und eine Zeit zur letzten Aktualisierung für jeden in Zusammenhang stehenden Nutzer enthält.

6. Verfahren nach Anspruch 1,
**dadurch gekennzeichnet, dass** sich die empfangene Abfrage bezogen auf den geografischen Bereich in Punkt a) auf ein gesamtes Land oder auf spezifische Bereiche in einem oder mehreren Ländern bezieht.

7. Verfahren nach Anspruch 1,
**dadurch gekennzeichnet, dass** Schritt d) durch Senden von einer SMS oder durch einen Telefonanruf ausgeführt wird.

8. Verfahren nach Anspruch 1,
**dadurch gekennzeichnet, dass** die Kategorien in Schritt e) beinhalten: Nutzer, welche in einer gefährlichen Zone residieren, Nutzer, welche sich abgemeldet haben und außerhalb der gefährlichen Zone sind, ein unklarer Status in Bezug auf Nutzer aufgrund einer ausbleibenden Antwort, ein nicht beantworteter Ruf oder ein technischer Fehler bei dem Telekommunikationsnetzwerk.

9. Verfahren nach Anspruch 1,
**dadurch gekennzeichnet, dass** die Statusanzeige auf einer grafischen Nutzer-Schnittstelle dargestellt wird, welche mit dem Client bzw. den Clients (20) verbunden ist, wobei einem Bediener des Systems eine Übersicht über alle Nutzer dargestellt wird, welche im Ausland residieren, und wobei der Bediener in jedes Land oder in jeden Bereich zur detaillierten Statusinformation gehen kann, und wobei der Bediener über die Nutzer-Schnittstelle ferner den Alarm über Nutzer ausführen kann, welche in einem oder mehreren ausgewählten geografischen Bereichen residieren.

10. System zum zum Darstellen von einer aktualisierten Status-Übersicht von Nutzern, welche in einem oder mehreren spezifischen geografischen Orten im Ausland residieren, und wobei es gewünscht ist, eine Meldung an betroffene Nutzer zu senden, wobei die Nutzer dahin gehend identifiziert sind, dass sie mit einer MSISDN-Nummer in einem Mobil-Netzwerk in Zusammenhang stehen,
**dadurch gekennzeichnet, dass** das System einen Server (10), welcher über eine Nutzer-Schnittstelle mit einem oder mehreren Clients (20) in Kommunikation steht, und eine Datenbank (30) enthält, welche eine aktualisierte Ortsinformation und MSISDN-Nummern in Zusammenhang mit den Nutzern, welche im Ausland residieren, enthält, und wobei das System ferner ein Element zum Ausführen des Verfahrens nach einem der Ansprüche 1 bis 9 enthält.

## Revendications

1. Procédé pour présenter une vue d'ensemble de statut mis à jour d'utilisateurs qui se trouvent dans une ou plusieurs zone(s) géographique(s) spécifique(s) à l'étranger, et où il est souhaitable d'envoyer un message à des utilisateurs concernés, les utilisateurs étant identifiés dans la mesure où ils sont associés à un numéro MSISDN dans un réseau mobile, et où les étapes suivantes sont exécutées dans un serveur (10) qui est connecté audit réseau mobile, et où le serveur (10) est en communication avec un ou plusieurs client(s) (20) avec une interface d'utilisateur, et une base de données (30) contenant des informations de position mises à jour pour les numéros MSISDN associés aux utilisateurs qui se trouvent à différents endroits à l'étranger :
(a) recevoir une requête en provenance d'un client (20) contenant des informations relatives à une ou plusieurs position(s) pertinente(s) à laquelle/auxquelles une transmission de message est souhaitable ;
(b) collecter des informations pertinentes à partir de ladite base de données (30) sur la base de la position demandée, les informations contenant des détails personnels pertinents pour des utilisateurs associés aux numéros MSISDN qui se trouvent actuellement à la position interrogée, et où ces informations sont envoyées au client (20) en vue des les présenter sur l'interface d'utilisateur ;
(c) recevoir des informations en provenance du client (20) relatives au message à envoyer aux numéros MSISDN qui sont situés à une ou plusieurs position(s) pertinente(s) ;
d) envoyer ledit message à des utilisateurs associés à des numéros MSISDN pertinents ;
e) recevoir et traiter tous les messages de réponse en provenance d'utilisateurs qui reçoivent le message, et mettre à jour les informations de statut des utilisateurs dans la base de données (30) sur la base des messages de réponse, et classer ces messages de réponse en catégories en fonction du type de réponse donné ;
f) envoyer des informations supplémentaires consécutives à un événement indésirable à des utilisateurs qui se trouvent encore dans la région en question afin de suivre ces utilisateurs ; et
g) envoyer lesdites informations de statut mises à jour audit client (20) en vue de lui présenter le statut des utilisateurs.

2. Procédé selon la revendication 1, **caractérisé en ce que** la base de données (30) est mise à jour de façon continue avec des informations de position et des numéros MSISDN d'utilisateurs qui se trouvent à l'étranger avec l'aide d'une sonde qui identifie des requêtes en provenance d'opérateurs étrangers dans le réseau mobile sur l'enregistreur de localisation nominal (HLR).

3. Procédé selon la revendication 2, **caractérisé en ce qu'**un nouvel enregistrement contenant des informations de position mises à jour et des numéros MSISDN est ajouté à la base de données (30) lorsque la sonde détecte une requête relative à un numéro MSISDN pertinent en provenance d'un opérateur étranger, et dans lequel l'enregistrement est mis à jour de façon continue lorsque de nouvelles requêtes en provenance de nouvelles régions ou de nouveaux pays sont détectées.

4. Procédé selon les revendications 2 et 3, **caractérisé en ce qu'**un enregistrement existant est effacé de la base de données (30) lorsque la sonde détecte qu'un utilisateur associé au numéro MSISDN concerné retourne dans son pays d'origine.

5. Procédé selon l'une quelconque des revendications précédentes, **caractérisé en ce que** la base de données, en plus des informations de position et du numéro MSISDN, contient également la date et l'heure de la dernière mise à jour pour chaque utilisateur associé.

6. Procédé selon la revendication 1, **caractérisé en ce que** la requête reçue concernant la zone géographique au point a) est relative à un pays entier ou à des régions spécifiques dans un ou plusieurs pays.

7. Procédé selon la revendication 1, **caractérisé en ce que** l'étape d) est exécutée en envoyant un SMS ou en passant un appel téléphonique.

8. Procédé selon la revendication 1, **caractérisé en ce que** les catégories à l'étape e) sont les suivantes : des utilisateurs qui se trouvent dans une zone à risques ; des utilisateurs qui sont sortis ou se trouvent à l'extérieur de la zone à risques ; et des utilisateurs au statut non clarifié en raison d'une absence de réponse, d'un appel sans réponse ou d'une défaillance technique sur le réseau de télécommunications.

9. Procédé selon la revendication 1, **caractérisé en ce que** l'affichage du statut est présenté sur une interface graphique d'utilisateur qui est connectée au(x) client(s) (20), où un opérateur du système est présenté avec une vue d'ensemble de tous les utilisateurs qui se trouvent à l'étranger, et où l'opérateur peut pénétrer dans chaque pays et dans chaque région pour obtenir des informations de statut détaillées, et où l'opérateur, par l'intermédiaire de ladite interface d'utilisateur, peut en outre déclencher ladite alerte pour des utilisateurs qui se trouvent dans une ou plusieurs des zones géographiques sélectionnées.

10. Système pour présenter une vue d'ensemble de statut mis à jour d'utilisateurs qui se trouvent dans une ou plusieurs zone(s) géographique(s) spécifique(s) à l'étranger, et où il est souhaitable d'envoyer un message à des utilisateurs concernés, dans lequel les utilisateurs sont identifiés dans la mesure où ils sont associés à un numéro MSISDN dans un réseau mobile, **caractérisé en ce que** le système comprend un serveur (10) qui est en communication avec un ou plusieurs client(s) (20) avec une interface d'utilisateur, et une base de données (30) contenant des informations de position et des numéros MSISDN mis à jour associés aux utilisateurs qui se trouvent à l'étranger, et où le système comprend en outre des moyens pour exécuter le procédé selon les revendications 1 à 9.
